# EUROPÄISCHE PATENTANMELDUNG

(11) **EP 0 557 746 A1**
(43) Veröffentlichungstag der Anmeldung: **01.09.1993**
(21) Anmeldenummer: 93101617.4
(22) Anmeldetag: 03.02.1993
(51) Int. Cl.: F04D 29/66

(54) **Schalldämpfer für Gebläse**

(30) Priorität: 22.02.1992 DE 4205458
(71) Anmelder: ROBERT BOSCH GMBH, 70442 Stuttgart (DE)
(72) Erfinder: Agnon, Reuben, Dr.-Ing., W-7591 Sasbach (DE); Göhre, Jochen, Dipl.-Ing., W-7500 Karlsruhe 1 (DE); Zink, Gerhard, W-7580 Bühl (DE)

(57) **Zusammenfassung**

Ein Schalldämpfer zum saugseitigen Anschließen an ein Gebläse, insbesondere Sekundärluftgebläse für Brennkraftmaschinen mit geregeltem Dreiwegekatalysator, weist ein Gehäuse (20) mit einer Luftein- und -austrittsöffnung (21,22) auf. Zur Einsparung von Bauvolumen ist das Gehäuse (20) mit einem Filtereinsatz (23) aus schalldämmendem Material ausgefüllt, so daß der Schalldämpfer gleichzeitig als Luftfilter dient und ein separater Luftfilter eingespart werden kann.

## Beschreibung

### Stand der Technik

Die Erfindung geht aus von einem Schalldämpfer für Gebläse, insbesondere Sekundärgebläse für Brennkraftmaschinen mit geregeltem Dreiwegekatalysator, der im Oberbegriff des Anspruchs 1 definierten Gattung.

Sekundärluftgebläse werden bei Brennkraftmaschinen mit geregeltem Dreiwegekatalysator eingesetzt, um Frischluft in deren Abgassystem einzublasen. Dadurch wird ein Nachverbrennen der Abgase bei Temperaturen von über 600°C in Gang gesetzt, in dessen Verlauf der Gehalt an Kohlenmonoxid und Kohlenwasserstoffverbindungen im Abgas reduziert wird, bevor das Abgas den Katalysator durchströmt. Dem Katalysator wird durch den Verbrennungsvorgang zudem zusätzlich Wärme zugeführt, was insbesondere für den Kaltstart von Vorteil ist. Saugseitig ist vor dem Sekundärgebläse ein Filter vorgesehen, das Fremdpartikel aus der Ansaugluft entfernt. Bevorzugt wird hierbei die Luft hinter dem Luftfilter der Brennkraftmaschine abgesaugt, so daß ein separater Luftfilter eingespart wird. Dies ist jedoch nicht in allen Fällen möglich. Überdies tritt an der Ansaugöffnung solcher Sekundärluftgebläse eine erhebliche Geräuschentwicklung auf, die den Einsatz schalldämmender Systeme, sog. Schalldämpfer, erfordert.

### Vorteile der Erfindung

Der erfindungsgemäße Schalldämpfer mit den kennzeichnenden Merkmalen des Anspruchs 1 hat den Vorteil, daß der Schalldämpfer zugleich die Funktion des Luftfilters übernimmt, Schalldämpfer und Luftfilter also eine integrierte Baueinheit darstellen.

Durch die in den weiteren Ansprüchen aufgeführten Maßnahmen sind vorteilhafte Weiterbildungen und Verbesserungen des im Anspruch 1 angegebenen Schalldämpfers möglich.

Wird gemäß einer bevorzugten Ausführungsform der Erfindung die axiale Länge des Filtereinsatzes so bemessen, daß vor und hinter dem Filtereinsatz jeweils ein Freiraum zur Luftein- bzw -austrittsöffnung hin im Gehäuse verbleibt, so wird auch der Forderung Rechnung getragen, daß der Schalldämpfer nur geringe Druckverluste bei der Luftdurchströmung aufweisen soll.

Gemäß einer besonders vorteilhaften Ausführungsform der Erfindung ist das Gehäuse des Schalldämpfers rotationssymmetrisch mit koaxial angeordneten Luftein- und -austrittsöffnungen derart ausgebildet, daß der lichte Durchmesser des Gehäuses ausgehend von der Lufteintrittsöffnung sich linear vergrößert, dann über einen Axiallängenabschnitt des Gehäuses annähernd konstant bleibt und schließlich zur Luftaustrittsöffnung hin sich sprungartig verkleinert. Durch diese geometrische Gestaltung des Schalldämpfergehäuses wird eine erhebliche Geräuschreduzierung erreicht. Außerdem kann die axiale Baulänge des Schalldämpfers relativ klein gehalten werden.

### Zeichnung

Die Erfindung ist anhand von in der Zeichnung dargestellten Ausführungsbeispielen in der nachfolgenden Beschreibung näher erläutert. Es zeigen:
- Fig. 1: ein Prinzipdarstellung einer Brennkraftmaschine mit geregeltem Dreiwegekatalysator, Sekundärluftgebläse und an dessen Ansaugseite angeschlossenem Schalldämpfer für Kraftfahrzeuge,
- Fig. 2: eine Seitenansicht des Schalldämpfers in Fig. 1, teilweise geschnitten,
- Fig. 3: einen Schnitt längs der Linie III-III in Fig. 2,
- Fig. 4: eine Seitenansicht eines Schalldämpfers gemäß einem weiteren Ausführungsbeispiel, teilweise geschnitten,
- Fig. 5: einen Schnitt längs der Linie V-V in Fig. 4.

### Beschreibung der Ausführungsbeispiele

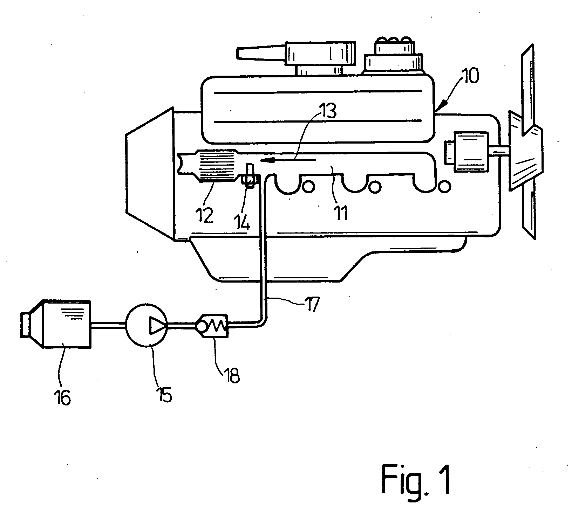

Eine in Fig. 1 schematisch skizzierte und insgesamt mit 10 bezeichnete Brennkraftmaschine für ein Kraftfahrzeug weist einen Abgasstrang 11 auf, in dem ein geregelter Dreiwegekatalysator 12 liegt. Das Abgas strömt in Richtung des in Fig. 1 eingezeichneten Pfeils 13. In Strömungsrichtung des Abgases ist vor dem Katalysators 12 eine sog. Lambdasonde 14 angeordnet. Ein Sekundärluftgebläse 15 ist ansaugseitig mit einem Schalldämpfer 16 versehen und druckseitig über eine Druckleitung 17 mit dem Abgasstrang 11 verbunden. Die Druckleitung 17 mündet in Strömungsrichtung des Abgases (Pfeil 13) gesehen vor dem Katalysator 12. In der Druckleitung 17 ist ferner ein Rückschlagventil 18 angeordnet, das bei stillgesetztem Gebläse 15 verhindert, daß Abgas über die Druckleitung 17 und das Gebläse 15 austritt.

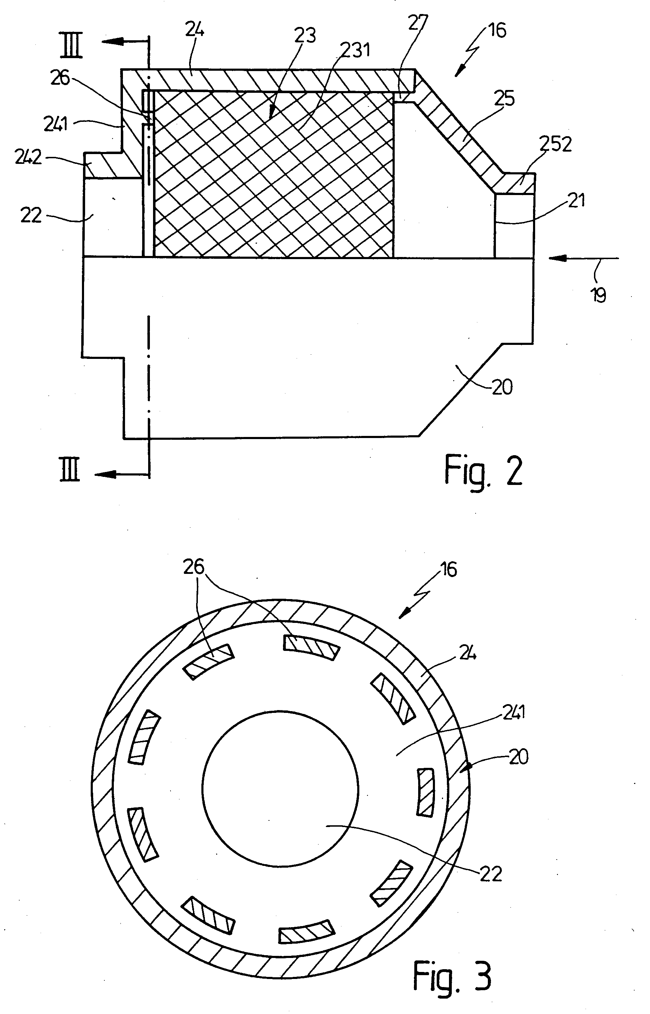

Der Schalldämpfer 16 ist in Fig. 2 teilweise im Längsschnitt und in Fig. 3 im Querschnitt dargestellt. Er weist ein rotationssymmetrisches Gehäuse 20 auf, an dessen einer Stirnseite eine Lufteintrittsöffnung 21 und an dessen anderer Stirnseite eine Luftaustrittsöffnung 22 vorhanden ist. Die beiden Öffnungen 21,22 sind koaxial zueinander ausgerichtet und konzentrisch zur Längsachse des Gehäuses 20 angeordnet. Die Luftströmungsrichtung ist in Fig. 2 mit dem Pfeil 19 gekennzeichnet. Das Gehäuse 20 ist derart ausgebildet, daß sein lichter Durchmesser ausgehend von der Lufteintrittsöffnung 21 sich linear vergrößert, dann über einen Axiallängenabschnitt annähernd konstant bleibt und zur Luftaustrittsöffnung 22 hin sich sprungartig verkleinert. Das Gehäuseinnere ist mit einem Filtereinsatz 23 aus schalldämmendem Material ausgefüllt, so daß der Schalldämpfer zugleich als Luftfilter arbeitet. Der als Zylinderkörper 231 ausgebildete Filtereinsatz 23 liegt dabei mit seinem Zylindermantel an der Innenwand des im Durchmesser konstanten Axiallängenabschnitts des Gehäuses 20 an und hält stirnseitig jeweils einen Abstand zu der Lufteintrittsöffnung 21 und der Luftaustrittsöffnung 22 ein. Dadurch verbleibt zwischen dem Filtereinsatz 23 und der Lufteintrittsöffnung 21 einerseits und dem Filtereinsatz 23 und der Luftaustrittsöffnung 22 andererseits jeweils ein Freiraum, wodurch die statischen Druckverluste bei der Luftdurchströmung verringert werden.

Im einzelnen ist das Gehäuse 20 zweiteilig ausgebildet und besteht aus einem Gehäusetopf 24 mit einem ebenen Topfboden 241 und einem die Topföffnung abschließenden konusartigen Gehäusetrichter 25. Im Topfboden 241 ist die Luftaustrittsöffnung 22 koaxial angeordnet, während die Lufteintrittsöffnung 21 die von der Topföffnung abgekehrte durchmesserkleinere Stirnseite des Gehäusetrichters 25 vollständig einnimmt. Lufteintrittsöffnung 21 und Luftaustrittsöffnung 22 sind jeweils von einem hohlzylindrischen Anschlußstutzen 252 bzw. 242 umschlossen, die einstückig am Gehäusetrichter 25 bzw. am Gehäusetopf 24 angeformt sind. Auf den Anschlußstutzen 252 wird die Druckleitung 17 endseitig aufgeschoben. An den Anschlußstutzen 242 kann eine Saugleitung angeschlossen werden, wenn die Luftansaugung an einer definierten Stelle im Kraftfahrzeug erfolgen soll.

Zur axialen Fixierung des zylindrischen Filtereinsatzes 23 sind auf der Innenseite des ebenen Topfbodens 241 davon axial abstehende ringförmige Stegsegmente 26 (Fig. 3) auf einem zur Luftaustrittsöffnung 22 koaxialen Kreis angeordnet. Die Stegsegmente 26 bilden eine stirnseitige Anlage für den Filtereinsatz 23, so daß der gewünschte Abstand von der Luftaustrittsöffnung 22 sichergestellt ist. Der Gehäusetrichter 25 trägt einen axial vorstehenden Ringsteg 27, der in den Gehäusetopf 24 hineinragt und dort an der Innenwand des Gehäusetopfs 24 anliegt. Dieser Ringsteg 27 dient einerseits zur Zentrierung des Gehäusetrichters 25 im Gehäusetopf 24 und andererseits zur axialen Fixierung des Filtereinsatzes 23 im Gehäusetopf 24, so daß letzterer zwischen den Stegsegmenten 26 und dem Ringsteg 27 axial unverschieblich gehalten ist. Der Gehäusetopf 24 und der Gehäusetrichter 25 werden in geeigneter Weise miteinander lösbar verbunden, so daß der Filtereinsatz 23 auswechselbar ist.

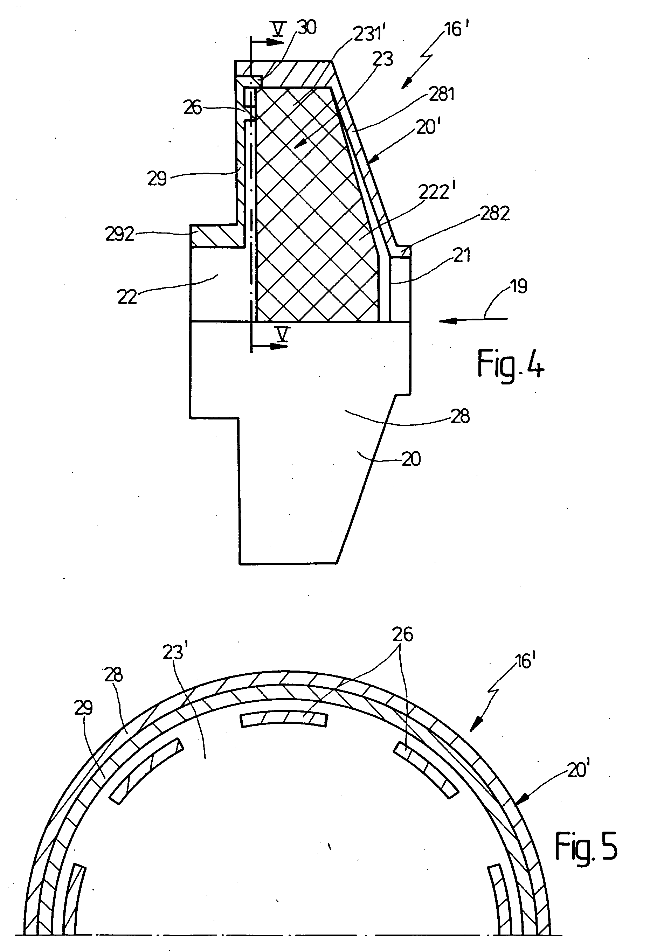

In Fig. 4 und 5 ist ein weiteres Ausführungsbeispiel eines Schalldämpfers 16' dargestellt, der nach dem gleichen Konstruktionsprinzip wie der Schalldämpfer 16 aufgebaut ist. Das ebenfalls zweiteilige Gehäuse 20' enthält wieder die Lufteintrittsöffnung 21 und die Luftaustrittsöffnung 22. Beide sind koaxial zur Längsachse des Gehäuses 20' angeordnet. Das Innere des Gehäuses 20' ist mit einem in der Formgebung modifizierten Filtereinsatz 23' ausgefüllt. Der ebenfalls so angeordnet ist, daß er zur Lufteintrittsöffnung 21 einerseits und Luftaustrittsöffnung 22 andererseits jeweils Freiräume im Gehäuse 20' beläßt.

Das Gehäuse 20' ist ebenfalls zweiteilig ausgebildet und besteht aus einem Gehäusetopf 28 mit trichter- oder konusförmigem Topfboden 281, dessen durchmesserkleinere Stirnseite von der Lufteintrittsöffnung 21 vollständig eingenommen wird, und einen plattenartigen Gehäusedeckel 29, der die Topföffnung abschließt und die Luftaustrittsöffnung 22 enthält. Lufteintrittsöffnung 21 und Luftaustrittsöffnung 22 sind wiederum von einem Anschlußstutzen 282 bzw. 292 umschlossen. Der Anschlußstutzen 282 ist einstückig mit dem Topfboden 281 des Gehäusetopfs 28 und der Anschlußstutzen 292 ist einstückig mit dem Gehäusedeckel 29. Letzterer liegt in einer Ringpassung 30 im Gehäusetopf 28 ein und ist mit diesem lösbar verbunden. Er trägt an seiner Innenseite die axial abstehenden ringförmigen Stegsegmente 26, die wiederum auf einem zur Luftaustrittsöffnung 22 koaxialen Kreis angeordnet sind. Die Stegsegmente 26 liegen an der Stirnseite des Filtereinsatzes 23' an und halten diesen axial unverschieblich im Gehäusetopf 28. Der Filtereinsatz 23' weist neben einem zylindrischen Abschnitt 231' noch einen Konusabschnitt 232' auf, der sich am gehäusedeckelfernen Ende des Zylinderabschnittes 231' in den trichterförmigen Topfboden 241 hinein fortsetzt. Der Konusabschnitt 232' hat dabei einen größeren Neigungswinkel als der trichterförmige Topfboden 241. Unter Neigungswinkel wird hier der Winkel zwischen der Gehäuseachse und der Mantellinie des Konusabschnittes 232' bzw. des trichterförmigen Topfbodens 241 verstanden. Die axiale Länge des Konusabschnittes 232' ist kleiner bemessen als die Tiefe des trichterförmigen Topfbodens 241, so daß wiederum zwischen dem Filtereinsatz 23' und der Lufteintrittsöffnung 21 der gewünschte Freiraum zur Druckverlustminderung verbleibt.

## Patentansprüche

1. Schalldämpfer für Gebläse, insbesondere Sekundärgebläse für Brennkraftmaschinen mit geregeltem Dreiwegekatalysator, mit einem Gehäuse, das eine Lufteintrittsöffnung und eine an der Saugseite des Gebläses anzuschließende Luftaustrittsöffnung aufweist, dadurch gekennzeichnet, daß das Gehäuse (20,20') mit einem Filtereinsatz (23;23') aus schalldämmendem Material ausgefüllt ist.

2. Schalldämpfer nach Anspruch 1, dadurch gekennzeichnet, daß der Filtereinsatz (23;23') in seiner Axiallänge so bemessen ist, daß zwischen seinen Stirnseiten und der Luftein- und -austrittsöffnung (21,22) jeweils ein Freiraum im Gehäuse (20;20') verbleibt.

3. Schalldämpfer nach Anspruch 1 oder 2, dadurch gekennzeichnet, daß das Gehäuse (20,20') rotationssymmetrisch mit koaxial angeordneter Luftein- und -austrittsöffnung (21,22) derart ausgebildet ist, daß der lichte Durchmesser des Gehäuses (20;20') ausgehend von der Lufteintrittsöffnung (21) sich linear vergrößert, dann über einen Axiallängenabschnitt des Gehäuses (20;20) annähernd konstant bleibt und zur Luftaustrittsöffnung (22) hin sich sprungartig verkleinert.

4. Schalldämpfer nach Anspruch 3, dadurch gekennzeichnet, daß der Filtereinsatz (23;23') einen Zylinderabschnitt (231;231') aufweist und in diesem Bereich mit seinem Zylindermantel an der Innenwand des im Durchmesser konstanten Axiallängenabschnitts des Gehäuses (20;20') anliegt und stirnseitig jeweils einen Abstand zu der Luftein- und -austrittsöffnung (21,22) einhält.

5. Schalldämpfer nach Anspruch 3 oder 4, dadurch gekennzeichnet, daß das Gehäuse (20) zweiteilig ausgebildet ist und aus einem Gehäusetopf (24) mit ebenem Topfboden (241) und im Topfboden (241) koaxial angeordneter Luftaustrittsöffnung (22) und einem die Topföffnung abschließenden konusartigen Gehäusetrichter (25) besteht, dessen von der Topföffnung abgekehrte durchmesserkleinere Stirnseite vollständig von der Lufteintrittsöffnung (21) ausgefüllt ist.

6. Schalldämpfer nach Anspruch 3 oder 4, dadurch gekennzeichnet, daß das Gehäuse (20') zweiteilig ausgebildet ist und aus einem Gehäusetopf (28) mit trichterförmigem Topfboden (281), dessen im Durchmesser kleinere Stirnseite von der Lufteintrittsöffnung (21) ausgefüllt ist, und einem die durchmessergrößere Topföffnung abschließenden plattenartigen Gehäusedeckel (29) besteht, in dem die Luftaustrittsöffnung (22) koaxial angeordnet ist.

7. Schalldämpfer nach Anspruch 5 oder 6, dadurch gekennzeichnet, daß auf der Innenseite des ebenen Topfbodens (141) des Gehäusetopfes (24) oder des plattenartigen Gehäusedeckels (29) davon axial abstehende ringförmige Stegsegemente (26) auf einem zur Luftaustrittsöffnung (22) koaxialen Kreis angeordnet sind, die einen stirnseitigen Anschlag für den Zylinderabschnitt (231;231') des Filtereinsatzes (23;23') bilden.

8. Schalldämpfer nach Anspruch 6 oder 7, dadurch gekennzeichnet, daß der Gehäusetrichter (25) einen axial vorstehenden Ringsteg (27) trägt, der paßgenau in den Gehäusetopf (24) hineinragt und sich dort an die Stirnseite des Filtereinsatzes (23) anlegt.

9. Schalldämpfer nach Anspruch 6 oder 7, dadurch gekennzeichet, daß der Filtereinsatz (23') einen an dem Zylinderabschnitt (231') sich einstückig anschließenden, in den trichterförmigen Topfboden (281) des Gehäusetopfes (28) hineinragenden Konusabschnitt (232') aufweist, dessen Neigungswinkel größer ist als der Neigungswinkel des trichterförmigen Topfbodens (281) und dessen axiale Länge kleiner ist als die Tiefe des trichterförmigen Topfbodens (281).

10. Schalldämpfer nach einem der Ansprüche 3 - 9, dadurch gekennzeichnet, daß die Luftein- und -austrittsöffnung (21,22) jeweils von einem hohlzylindrischen Anschlußstutzen (252,242;282,292) umschlossen sind, die vorzugsweise einstückig am Gehäusetrichter (25) bzw. am ebenen Topfboden (241) des Gehäusetopfes (24) oder am trichterförmigen Topfboden (282) des Gehäusetopfes (28) bzw. am plattenartigen Gehäusedeckel (29) angeformt sind.
